# EUROPEAN PATENT SPECIFICATION

(11) **EP 2 908 661 B1**
(45) Date of publication and mention of the grant of the patent: **20.11.2019**
(21) Application number: 13847337.6
(22) Date of filing: 17.10.2013
(51) Int. Cl.: A23L 17/60, A23L 3/46, A23L 33/10, A61K 36/02, A61K 35/748

(54) **MICROALGAL FLOUR GRANULES AND PROCESS FOR PREPARATION THEREOF**
MIKROALGENMEHLGRANULAT UND VERFAHREN ZUR HERSTELLUNG DAVON
GRANULÉS DE FARINE DE MICROALGUES ET PROCÉDÉ DE PRÉPARATION DE CEUX-CI

(30) Priority: 17.10.2012 US 201261715031 P; 15.03.2013 US 201361793334 P
(43) Date of publication of application: 26.08.2015
(73) Proprietor: Corbion Biotech, Inc., South San Francisco, CA 94080 (US)
(72) Inventor: LEFEVRE, Philippe, 59660 Haverskerque (FR); LIS, Jose, 59253 La Gorgue (FR); PASSE, Damien, 59500 Douai (FR); PATINIER, Samuel, 59000 Lille (FR); GUILLEMANT, Marilyne, 62120 Aire Sur La Lys (FR); DUEPPEN, Dan, South San Francisco, CA 94080 (US); PIECHOCKI, John, South San Francisco, CA 94080 (US); NORRIS, Leslie, South San Francisco, CA 94080 (US)
(74) Representative: Carpmaels & Ransford LLP
(86) International application number: PCT/US2013/065369
(87) International publication number: WO 2014/062882

(56) References cited:
- EP-B1- 1 853 124
- WO-A1-2012/095121
- DE-A1-102006 056 454
- US-A- 5 487 916
- US-A- 5 693 357
- US-A1- 2009 286 295
- US-A1- 2010 303 989
- US-A1- 2010 303 989
- US-A1- 2011 305 740
- US-A1- 2011 305 740
- NALIN SAMARASINGHE ET AL: "Algal cell rupture using high pressure homogenization as a prelude to oil extraction", RENEWABLE ENERGY, PERGAMON PRESS, OXFORD, GB, vol. 48, 20 April 2012 (2012-04-20), pages 300-308, XP028428119, ISSN: 0960-1481, DOI: 10.1016/J.RENENE.2012.04.039 [retrieved on 2012-05-11]

## Description

### Technical Field

The present invention relates to microalgal flour granules, a process for preparing them and a method of controlling a property of microalgal flour.

### Background

There are at least several algal species which can be used in food, most being "macroalgae" such as kelp, sea lettuce (*Ulva lactuca*) and red algae for food, of the *Porphyra* (cultivated in Japan) or dulse (red alga *Palmaria palmata*) type.

However, besides these macroalgae, there are also sources of algae represented by the "microalgae", i.e. photosynthetic or non-photosynthetic single-cell microscopic algae of marine or non-marine origin, cultivated for their applications in biofuel or food.

For example, spirulina (*Arthrospira platensis*) is cultivated in open lagoons (by phototrophy) for use as a food supplement or incorporated in small amounts into confectionery or drinks (generally less than 0.5% w/w).

Other lipid-rich microalgae, including certain species of *Chlorella,* are also popular in Asian countries as food supplements (mention is made of microalgae of the *Crypthecodinium* or *Schizochytrium* genera). The production and use of microalgal flour is also disclosed in WO2010/120923 and WO2010045368.

The oil fraction of the microalgal flour, which can be composed essentially of monounsaturated oils, may provide nutritional and health advantages compared with the saturated, hydrogenated and polyunsaturated oils often found in conventional food products.

In endeavouring to make a microalgal flour from microalgal biomass, significant difficulties remain. For example, when using microalgae with a high oil content (e.g. 10, 25, 50 or even 75% or more by dry cell weight), an undesirably sticky dry powder may be obtained. This may require the addition of flow agents (including silica-derived products).

Problems of water-dispersibility of the dried biomass flours, which then have poorer wettability properties, can also be encountered.

There is therefore still an unsatisfied need for novel forms of lipid-rich microalgal biomass flour in order to make it possible to easily incorporate them, on a large scale, into food products which must remain delicious and nutritive.

DE 10 2006 056454 discloses a new nutritional supplement, containing the algal components *Spirulina platensis, Chlorella pyrenoidosa* and *Lithothamnium calcerum,* in the form of granules and a process for the production of a nutritional supplement from algae by: (A) spray-drying the algae; (B) blowing the dried algae into wet granulation apparatus; (C) spraying sterile water into the apparatus; (D) agglomerating the spray-dried powder the water; (E) collecting granular particles from the base of the apparatus; and (F) selecting granules of the required size by screening.

US 2010/303989 discloses compositions of microalgae-derived flour from multiple genera, species and strains of edible microalgae. The microalgae are free of algal toxins and contain varying levels of primarily monounsaturated triglyceride oil. Disclosed flours are formulated as free-flowing, blendable powders, mixed food ingredients, oxidation-stabilized, homogenized and micronized and combinations therein. Disclosed flours also form self-stabilizing emulsions in slurries with manageable viscosities. Methods of formulating flours and incorporating them into food compositions are also disclosed as are flours with significant digestible protein and unique dietary fiber content and associated water binding, texturizing and healthy oil delivery attributes. Methods of oil and fat replacement using the disclosed flours are also disclosed. The disclosed flours can be manufactured from edible and inedible heterotrophic fermentation feedstocks, including corn starch, sugar cane, glycerol and depolymerized cellulose.

### Detailed Description

The term "microalgal flour" herein means a substance comprised of a plurality of particles of microalgal biomass. The microalgal biomass is derived from algal cells, which may be either whole, disrupted or a combination of whole and disrupted cells. The microalgal cells may be grown in the dark (e.g. *Chlorella* grown in the dark on a fixed carbon source).

The term "oversize" means the particles in a particle distribution that are greater in size than a given threshold, either numerically or physically, as in the mass fraction or other measure of particles retained by a filter of a given porosity.

According to one aspect of the present invention, there are provided microalgal flour granules as defined in claim 1. Said microalgal flour granules of the invention have at least one of the following characteristics:
a particle size distribution of from 2 to 400 micrometers;
flow grades, determined according to test A defined later, of 0.5 to 60% by weight of the oversize at 2000 micrometers, 0.5 to 60% by weight of the oversize at 1400 micrometers, and 0.5 to 95% by weight for the oversize at 800 micrometers, and
a degree of wettability, expressed according to test B defined later, at a value of 0.2 to 4.0 cm,
wherein the microalgal flour granules comprise lysed and intact microalgal cells and the percentage of intact cells is 25% to 75%,
and the microalga is of the genus *Chlorella.*

Embodiments of the granules of the present invention are derived from microalgal biomass suitable for human consumption which is rich in nutrients, such as lipids or proteins. For example, the microalgae may be rich in lipids. For example, the microalgal biomass may comprise at least 10% by dry weight of lipid, preferably at least 25 to 35% or more by dry weight of lipid.

In a preferred embodiment, the biomass contains at least 25%, at least 50% or at least 75% by dry cell weight of lipid. The lipid produced can have a fatty acid profile that comprises less than 2% highly unsaturated fatty acids (HUFA) such as docosahexanoic acid (DHA) .

The microalgae are of the *Chlorella* genus. *Chlorella protothecoides* is one such species of microalga that is suitable for use in preparing a microalgal flour.

Embodiments of the present invention also relate to microalgal flour granules which have particular aerated bulk density, specific surface area parameters and an excellent ability to disperse in water.

The present invention also provides, in a second aspect, a process for preparing these microalgal flour granules, as defined in claim 9. Said process comprises the following steps:
1) preparing a microalgal flour emulsion in water at a dry matter content of 15 to 40% by weight;
2) introducing the emulsion into a homogeniser and homogenising said emulsion;
3) spraying the homogenised emulsion in a vertical spray-drier having a spray-drying zone equipped with a high-pressure nozzle in its upper part and a moving belt, for moving algal material into a drying zone and then a cooling zone, at its base, wherein the spray-drier is regulated such that:
   a) the pressure applied at the spray nozzle is at values of more than 200 bar, 200 to 150 bar, 150 to 100 bar, 100 to 50 bar, 50 to 25 bar or less than 50 bar (1 bar = 100 kPa) so as to select the particle size distribution of the droplets sprayed;
   b) the spray angle is 50° to 80° at an inlet temperature of between 160 and 250°C, 160 to 200°C or 170 to 190°C;
   c) the outlet temperature in the spray-drying zone is 55 to 90°C, preferably 60 to 70°C;
   d) the inlet temperature of the drying zone on the moving belt is 40 to 80°C, preferably 60 to 70°C, and the outlet temperature is 40 to 80°C, preferably 60 to 70°C; and
   e) the inlet temperature of the cooling zone is 10 to 40°C, preferably 10 to 20°C, and the outlet temperature is 20 to 80°C, preferably 50 to 80°C, and
4) collecting the microalgal flour granules thus obtained.

According to a third aspect of the present invention, there is provided a method for controlling a property of a microalgal flour, as defined in claim 12. Said method for controlling at least one of the particle size, flowability and wettability of a microalgal flour, comprises the following steps:
1) preparing a microalgal flour emulsion in water;
2) introducing the emulsion into an homogeniser and homogenising said emulsion;
3) spraying the homogenised emulsion ina vertical spray-drying zone equipped with a high-pressure nozzle in its upper part and a moving belt, for moving algal material into a drying zone and then a cooling zone, at its base, wherein the spray-drier is regulated such that:
   a) the pressure applied at the spray nozzles is at values of more than 200 bar, 200 to 150 bar, 150 to 100 bar, 100 to 50 bar, 50 to 25 bar, or less than 50 bar, so as to select the particle size distribution of the droplets sprayed;
   b) the spray angle is 50° to 80° at an initial temperature of between 160 and 250°C, 160 to 200°C, or 170 to 190°C;
   c) the outlet temperature in the spray-drying zone is 55 to 90°C, preferably 60 to 70°C;
   d) the inlet temperature of the drying zone on the moving belt is 40 to 80°C, preferably 60 to 70°C, and the outlet temperature is 40 to 80°C, preferably 60 to 70°C; and
   e) the inlet temperature of the cooling zone is 10 to 40°C, preferably at 10 to 20°C, and the outlet temperature is 20 to 80°C, preferably 50 to 80°C, and
4) collecting the microalgal flour granules thus obtained.

Preferred features of these aspects of the invention and other aspects of the invention are defined in claims 2 to 8, 10, 11 and 13 to 19.

In the microalgal flour, the microalgal cell wall or cell debris can optionally encapsulate the oil at least until the food product containing it is cooked, thereby increasing the shelf life of the oil.

The microalgal flour may also provide other benefits, such as micronutrients, dietary fibres (soluble and insoluble carbohydrates), phospholipids, glycoproteins, phytosterols, tocopherols, tocotrienols and selenium.

The microalgae may be modified to have reduced amounts of pigments. For example *Chlorella protothecoides* may be modified so as to be reduced in or devoid of pigments. The modification may be accomplished by ultraviolet (UV) and/or chemical mutagenesis.

For example, *Chlorella protothecoides* was exposed to a cycle of chemical mutagenesis with N-methyl-N'-nitro-N-nitrosoguanidine (NTG) and the colonies were screened for the colour mutants. The colonies exhibiting no colour were then subjected to a cycle of UV irradiation.

A pigment-reduced strain of *Chlorella protothecoides* was isolated and corresponds to *Chlorella protothecoides* 33-55 deposited on 13 October 2009 with the American Type Culture Collection (10801 University Boulevard, Manassas, Virginia 20110-2209) in accordance with the Treaty of Budapest.

In another embodiment, a strain of *Chlorella protothecoides* with a reduced pigmentation was isolated and corresponds to *Chlorella protothecoides* 25-32 deposited on 13 October 2009 at the American Type Culture Collection.

To produce the granules of the invention, the microalgae (e.g. *Chlorella protothecoides)* may be cultivated in a medium containing a fixed carbon source (e.g. glucose) and a nitrogen source in the absence of light (heterotrophic conditions). The resulting microalgal flour can be yellow, pale yellow or white in colour and optionally can have a lipid content of 30-70, 40-60 or about 50% lipid by dry cell weight. The yellow to white colour can result from a chlorophyll content of less than 500ppm, 50 ppm or 5ppm.

The solid and liquid growth media are generally available in the literature and the recommendations for preparing the particular media which are suitable for a large variety of microorganism strains can be found, for example, online at http://www.utex.org/, a site maintained by the University of Texas at Austin for its culture collection of algae (UTEX).

The production of biomass may be carried out in bioreactors. The specific examples of bioreactors, the culture conditions and the heterotrophic growth and the propagation method can be combined in any appropriate manner in order to improve the efficiency of the microbial growth and lipids and/or proteins production. Preferably, the culturing of the microalgae is performed in the dark in the presence of a fixed carbon source (e.g. sugar and/or glycerol).

In order to prepare the biomass for use such as in a composition of food, the biomass obtained at the end of fermentation is harvested from the fermentation medium. At the time that the microalgal biomass is harvested from the fermentation medium, the biomass comprises intact cells, mostly in suspension in an aqueous culture medium.

In order to concentrate the biomass, a step of solid-liquid separation, by filtration or by centrifugation, may then be carried out.

After concentration, the microalgal biomass can be processed in order to produce vacuum-packed cakes, algal flakes, algal homogenates, algal powder, algal flour or algal oils.

The microalgal biomass may also be dried in order to facilitate the subsequent processing or use of the biomass in its various applications, in particular food applications.

The final food products have various textures depending on whether the algal biomass is dried and, if it is, according to the drying method used (see, for example, US 6,607,900, US 6,372,460 and US 6,255,505).

In the process of the second aspect or the method of the third aspect of the invention, a spray-drier, in which a liquid suspension is sprayed in the form of a dispersion of fine droplets in a heated air stream is used. The material entrained is rapidly dried and forms a dry powder.

This microalgal flour may be prepared from concentrated microalgal biomass which has been homogenised, the homogenate then being spray-dried.

The cells may be lysed. The cell wall and the intracellular components may be milled or otherwise reduced, e.g. using a homogenizer, to particles (non-agglomerated lysed cells). In specific embodiments, the resulting particles may have an average size of less than 500 µm, 100 µm or even 10 µm or less.

For example, a pressure disrupter can be used to pump a suspension containing the cells through a restricted orifice in order to lyse the cells. A high pressure (e.g. up to 1500 bar) is applied, followed by an instantaneous expansion through a nozzle.

The disruption of the cells may occur via three different mechanisms: encroachment on the valve, high shear of the liquid in the orifice and sudden drop in pressure on outlet, causing the cell to explode.

The method releases intracellular molecules. A NIRO homogeniser (GEA NIRO SOAVI) (or any other high-pressure homogeniser) can be used to disrupt the cells.

This high-pressure treatment (e.g. up to approximately 1500 bar) of the algal biomass may lyse more than 90% of the cells and may reduce the particle size (e.g. to less than about 5 microns). In one embodiment, the pressure is from about 900 bar to 1,200 bar. Preferably, the pressure is about 1,100 bar. In another embodiment, to increase the percentage of lysed cells, the algal biomass is subjected to high-pressure treatment two or more times. In an embodiment, double homogenization is used to increase the cell lysis to above 50%, above 75% or above 90%. Lysis of approximately 95% has been observed using this technique.

In the granules of the first aspect of the invention, 25% to 75% of the cells are lysed.

Alternatively, or in addition, a bead mill is used. In a bead mill, the cells are agitated in suspension with small abrasive particles. The disruption of the cells is caused by shear forces, the milling between the beads and the collisions with beads. These beads disrupt the cells so as to release the cellular content therefrom. A description of a suitable bead mill is given, for example, in US patent 5, 330, 913.

A suspension of particles, optionally of smaller size than the cells of origin, in the form of an "oil-in-water" emulsion, is obtained. This emulsion is then spray-dried, leaving a dry powder containing the cell debris and oil. After drying, the water content or the moisture content of the powder may be less than 10%, preferably less than 5%, more preferably less than 3%.

Embodiments of the present invention solve the aforementioned problems associated with prior art microalgal flour by providing granules which have particular properties, such as favourable colour, particle size distribution, flow, wettability, aerated bulk density, specific surface area and dispersibilty behaviour in water as measured by emulsion droplet size and zeta potential.

Specific microalgal flour granules in accordance with embodiments of the invention are characterized in that they have one or more of the following properties:
- a monomodal particle size distribution, e.g. as measured on a COULTER® LS laser particle size analyser, of 2 to 400 µm,
- flow grades, determined according to a test A, of 0.5 to 60% by weight for the oversize at 2000 µm, of 0.5 to 60% by weight for the oversize at 1400 µm and of 0.5 to 95% by weight for the oversize at 800 µm,
- degree of wettability, expressed according to a test B, by the height of the product settled in a 600 mL, 125 mm tall beaker (e.g. Fisher Scientific product code FB33114), at a value of 0.2 to 4.0 cm, preferably 1.0 to 3.0 cm.

The microalgal flour granules according to the invention may be characterized by their particle size distribution. This measurement may be carried out on a COULTER® LS laser particle size analyser, equipped with its small volume dispersion module or SVM (125 ml), according to the specifications provided by the manufacturer (e.g. in the *"Small Volume Module Operating instructions"*).

In an illustrative embodiment, the microalgal flour granules have one or more of the following properties:
- 45-55% lipid by dry cell weight;
- an aerated density of 0.37 ± 20%;
- a bulk density of 0.61 ± 20%;
- a %compression of 39.3 ± 20%;
- a cohesiveness at 2000 µm of 18.4 ± 20%;
- a cohesiveness at 1400 µm of 46.4 ± 20%;
- a cohesiveness at 800 µm of 12 ± 20%;
- a wettability of 2 mm ± 20%;
- a particle size distribution having a mode of 9.1 ± 20%;
- a particle size distribution having a D[4,3] of 10.6 ± 20%;
- a particle size distribution having a D90 (the value at which 90% of the distribution is of lesser diameter) of 19.5 ± 20%; and
- a surface area of 0.4 m²/g ± 20%.

In a more specific embodiment, the microalgal flour granules have all of the properties referred to in the previous paragraph.

In an embodiment of the present invention, the microalgal flour particles are agglomerated during processing. Despite the agglomeration, the microalgal flour granules according to the invention also have quite satisfactory flow capability, according to a test A. The resulting flow properties provide various advantages in the production of food from the microalgal flour. For example, more accurate measurements of flour quantities may be made during food product manufacturing and dispensing of flour aliquots may be more readily automated.

The test A consists of measuring the degree of cohesion of the microalgal flour granules according to the invention. First, the microalgal flour granules according to the invention are sieved with a mesh size of 800 µm. The flour granules which have a size of less than 800 µm are then recovered and introduced into a closed container and undergo mixing by epicycloidal movement, e.g. using a TURBULA type T2C laboratory mixer. By virtue of this mixing, the microalgal flour granules in accordance with the invention will, according to their own characteristics, express their propensities to agglomerate or to push away one another.

The granules thus mixed are then deposited on a column of 3 sieves (2000 µm; 1400 µm; 800 µm) for a further sieving.

Once the sieving has ended, the oversize on each sieve is quantified and the result gives an illustration of the "cohesive" or "sticky" nature of the microalgal flour granules.

Thus, a free flowing, and therefore weakly cohesive, powder of granules will flow through sieves of large mesh size but will be increasingly stopped as the meshes of said sieves become tighter.

A protocol for measuring particle size follows:
- sieve enough product on an 800 µm sieve so as to recover 50 g of product of size less than 800 µm,
- introduce these 50 g of flour granules of size less than 800 µm into a glass jar with a capacity of 1 litre (ref: BVBL Verrerie Villeurbannaise-Villeurbanne France) and close the lid,
- place this jar in the TURBULA model T2C mixer set to the speed of 42 rpm (Willy A. Bachofen Sarl-Sausheim-France) and mix for 5 minutes,
- prepare a column of 3 sieves (sold by SAULAS - diameter 200 mm; Paisy Cosdon - France) which will be placed on a Fritsch sieve shaker, model Pulverisette type 00.502; details of the assembly starting from the bottom to the top: sieve shaker, sieve base, 800 µm sieve, 1400 µm sieve, 2000 µm sieve, sieve shaker lid,
- deposit the powder resulting from the mixing on the top of the column (2000 µm sieve), close with the sieve shaker lid and sieve for 5 minutes on the FRITSCH sieve shaker, with an amplitude of 5 in the continuous position,
- weigh the oversize on each sieve.

In an embodiment, the microalgal flour is characterized by one or more of the following cohesiveness parameters:
o 0.5 to 55% by weight of oversize at 2000 µm,
o 0.5 to 60% by weight of oversize at 1400 µm,
o 0.5 to 30% by weight of oversize at 800 um.

By way of comparison, as will be shown hereinafter, the microalgal flour powders prepared by conventional drying techniques (single-effect spray-drying such as a tall form dryer or a box dryer) exhibit a sticky aspect, of low fluidity, which is reflected by a behaviour according to the test A:
- 50 to 90% by weight of oversize on 2000 µm,
- 0.5 to 30% by weight of oversize on 1400 µm,
- 5 to 40% by weight of oversize on 800 µm.

In other words, a majority of such microalgal flour powder (at least 50% of the powder) does not manage to cross the 2000 µm threshold, although initially sieved on 800 µm.

These results demonstrate that the conventional drying techniques result rather in the production of very cohesive powders since, after mixing, using little mechanical energy, particles of less than 800 µm do not manage to pass through a sieve of 2000 µm which nevertheless has a mesh size that is 2.5 times larger.

It is easily deduced therefrom that a conventional powder, exhibiting such a behaviour, is not easy to process in a preparation where a homogeneous distribution of the ingredients is recommended.

Conversely, microalgal flour compositions (and especially high-lipid microalgal flour compositions, e.g. 30-70% lipid by dry cell weight), according to embodiments of the present invention are much easier to process because they are less sticky. The low level of stickiness is evident from several measures including small granule size, high wettability and improved flowability.

Microalgal flour granules according to embodiments of the invention exhibit only a small oversize (e.g. < 50%) on 2000 µm. It is believed that the microalgal flour particles produced according to methods disclosed herein are less cohesive than granules prepared by prior methods.

The microalgal flour granules according to the invention are characterized by notable properties of wettability, according to a test B.

Wettability is a technological property that is very often used to characterize a powder re-suspended in water, for example in the dairy industries.

Wettability may be measured by the ability of a powder to become immersed after having been deposited at the surface of water (Haugaard Sorensen et al., 1978), reflecting the capacity of the powder to absorb water at its surface (Cayot et Lorient, 1998).

The measurement of this index conventionally consists of measuring the time necessary for a certain amount of powder to penetrate into the water through its free surface at rest. According to Haugaard Sorensen et al., 1978, a powder is said to be "wettable" if the time to penetrate is less than 20 seconds.

It is also necessary to associate with the wettability the ability of the powder to swell. Indeed, when a powder absorbs water, it gradually swells. Then, the structure of the powder disappears when the various constituents are solubilised or dispersed.

Among the factors that influence wettability are the presence of large primary particles, the presence of the fines, the density of the powder, the porosity and the capillarity of the powder particles, the presence of air, the presence of fats at the surface of the powder particles and the reconstitution conditions.

Test B more particularly reports on the behaviour of the microalgal flour powder brought into contact with water, by measuring, after a certain contact time, the height of the powder which decants when placed at the surface of the water.

The protocol for Test B is the following:
- introduce 500 ml of demineralised (deionized) water at 20°C into a 600 ml squat-form beaker (FISHERBRAND FB 33114),
- place 25 g of the microalgal flour powder uniformly at the surface of the water, without mixing,
- observe the behaviour of the powder after 3 h of contact,
- measure the height of the product that has penetrated the surface of the water and settled at the bottom of the beaker.

A low-wettability powder will remain at the surface of the liquid whereas, for a powder of better wettability, more material will settle at the bottom of the beaker.

The microalgal flour granules according to the invention have a degree of wettability, expressed according to this test B, by the height of the product settled in a beaker, at a value of 0.2 to 4.0 cm, preferably between 1.0 and 3.0 cm.

More particularly:
- the first family, of fine particle size, has a settled product height of 0.2 to 2.0 cm, preferably 1.2 to 1.4 cm.
- the second family, of large particle size, has a settled product height of 2.0 to 4.0 cm, preferably 2.6 to 2.9 cm.

By way of comparison, the flour of microalgae dried conventionally by single-effect spray-drying stays at the surface of the water to a greater extent than the flour described above and does not become sufficiently hydrated to be able to decant to the bottom of the beaker.

Microalgal flour granules according to embodiments of the present invention are also characterized by:
- their aerated bulk density,
- their specific surface area and
- their behaviour after dispersion in water.

The aerated bulk density is determined using a conventional method of measuring aerated bulk density, i.e. by measuring the mass of an empty container (g) of known volume and by measuring the mass of the same container filled with the product to be tested.

The difference between the mass of the filled container and the mass of the empty container divided by the volume (ml) then gives the value of the aerated bulk density.

For this test, the 100 ml container, the scoop used for filing and the scraper used are supplied with the apparatus sold by the company HOSOKAWA under the trademark POWDER TESTER type PTE.

To perform the measurement, the product is screened through a sieve with apertures of 2000 µm (sold by SAULAS). The density is measured on the product that is not retained on that screen.

Under these conditions, the microalgal flour granules according to embodiments of the invention can have an aerated bulk density of 0.30 to 0.50 g/ml. In a specific embodiment, the bulk density is 0.37 g/ml ± 20%.

This aerated bulk density value is all the more notable since the microalgal flour granules in accordance with embodiments of the invention have a higher density than the flour of conventionally-dried microalgae. It is believed that the density of a product will be lower if it is prepared by conventional spray-drying, e.g. less than 0.30 g/ml.

Microalgal flour granules in accordance with embodiments of the invention can also be characterized by their specific surface area.

The specific surface area is determined over the whole of the particle size distribution of the microalgal flour granules, e.g. by means of a Quantachrome specific surface area analyser based on a test for absorption of nitrogen onto the surface of the product subjected to the analysis, carried out on a SA3100 apparatus from Beckmann Coulter, according to the technique described in the article BET Surface Area by Nitrogen Absorption by S. BRUNAUER et al. (Journal of American Chemical Society, 60, 309, 1938).

Microalgal flour granules in accordance with an embodiment of the invention were found to have a specific surface area of 0.10 to 0.70 m²/g after degassing for 30 minutes at 30°C under vacuum. In a specific embodiment, the specific surface area of the flour according to the BET method is 0.3 to 0.6. In a yet more specific embodiment, the specific surface area of the flour according to the BET method is 0.4 ± 20%.

By way of comparison, the flour of microalgae dried by conventional spray-drying was found to have a specific surface area according to BET of 0.65 m²/g.

It is surprising to note that the larger the size of the microalgal flour granules, the smaller their specific surface area is, since large granules tend to be comprised of agglomerated smaller particles.

Finally, the microalgal flour granules in accordance with the invention are characterized by their dispersibility in water.

This dispersibility is measured in the following way (Test C): 0.50 g of microalgal flour granules are dispersed in 500 ml of demineralised (deionized) water and then the solution is homogenised at 300 bars in a PANDA homogeniser, sold by the company NIRO SOAVI.

Two parameters related to the water-dispersion ability of the products are measured:
- the size of the droplets of the emulsions formed after homogenisation (Test C-1),
- the zeta potential of the droplets, representing the electrostatic repulsion charge responsible for the stability of the discontinuous phase (hydrophobic globules) in the "continuous" aqueous phase (Test C-2).

The measurement of the droplet size may be carried out on a COULTER® LS laser particle size analyser. The measurements reveal that the microalgal flour granules thus dispersed form an emulsion or suspension of which the particle size distribution has two populations of droplets or particles centered on 0.4 and 4 µm.

By way of comparison, the emulsions or suspensions obtained under the same conditions with conventional microalgal flours are instead characterized by two populations centred on 0.08 µm and 0.4 µm.

In accordance with an embodiment of the invention, the emulsion or suspension formed has a first population of droplets or particles centered on a value of 0.1 to 1 µm and a second population of droplets or particles centered on a value of 1 to 10 µm.

The microalgal flour granules in accordance with the invention, dispersed in water, therefore have a tendency to form emulsions or suspensions that are less fine than those conventionally obtained with conventionally dried microalgal powders.

As for the zeta potential (abbreviated to "ZP"), it makes it possible to predict the stability and coalescence and/or aggregation states of a colloidal system.

The measurement principle is based on the electrophoretic mobility of the electrolytes subjected to an alternating electric field.

The higher the ZP is in absolute value, the emulsion is considered to be more stable.

It should be noted that a ZP = 0 mV symbolises the coalesced and/or aggregated states.

In order to carry out the stability measurements, 0.1 N hydrochloric acid is added in order to vary the ZP and to thus find the isoelectric point (abbreviated to "pI") for which ZP = 0 mV.

In an embodiment, the ZP of the microalgal flour is less than -40 mV and preferably less than -45 mV. In a further embodiment, the ZP is about -55 mV. The measurements carried out on the microalgal flour granules according to the invention show that they are stable for a pH > 5 and a ZP of - 55 mV. Their pI is 2.4.

By way of comparison, the conventional microalgal flours differ from the granules of the invention by virtue of their stability range (which begins at a pH of 4.5) with a ZP of -40 mV. Their pI is 2.5.

The microalgal flour granules in accordance with the invention are capable of being obtained by a spray-drying process which uses high-pressure spray nozzles in a co-current-flow tower which directs the particles towards a moving belt at the bottom of the tower.

The material is then transported as a porous layer through post-drying and cooling zones, which give it a crunchy structure, like that of a cake, which breaks at the end of the belt. The material is then processed to a desired average particle size. In order to carry out the granulation of the algal flour, by following this spray-drying principle, a FILTERMAT™ spray-drier sold by the company GEA NIRO or a TETRA MAGNA PROLAC DRYER™ drying system sold by the company TETRA PAK can, for example, be used.

Surprisingly and unexpectedly, the granulation of the microalgal flour by implementing, for example, this FILTERMAT™ process makes it possible not only to prepare, with a high yield, a product in accordance with the invention in terms of the particle size distribution and of its flowability, but also to confer on it unexpected properties of wettability and dispersibility in water, without necessarily needing granulation binders or anti-caking agents (although these may be optionally included).

By implementing the FILTERMAT™ process, a process of the second aspect of the invention or a method of the third aspect of the invention is carried out.

The first step of the process of the invention consists in preparing a suspension of lipid-rich (e.g. 30-70% or 40-60% lipid by dry cell weight) microalgal flour in water at a dry matter content of 15 to 40% by dry weight.

At the end of fermentation, the biomass may be at a concentration 130 to 250 g/l, with a lipid content of approximately 50%, a fibre content of 10 to 50%, a protein content of 2 to 15% and a sugar content of less than 10%.

As will be exemplified hereinafter, the biomass from the fermentation medium by any means known to those skilled in the art is subsequently:
- concentrated (e.g. by centrifugation),
- optionally preserved with the addition of standard preservatives (e.g. sodium benzoate and potassium sorbate),
- the cells disrupted.

The emulsion may then be homogenised. This may be accomplished with a two-stage device, for example a GAULIN homogeniser sold by the company APV with a pressure of 100 to 250 bar at the first stage and 10 to 60 bar at the second stage.

The homogenized flour suspension is then sprayed in a vertical spray-drier equipped with a moving belt at its base and with a high-pressure nozzle in its upper part.

During this process, the following parameters may be regulated in any range that gives the desired particle properties:
a) the pressure applied at the spray nozzles; for example, at values greater than or equal to 100 bar, or at values less than or equal to 50 bar, so as to select the particle size distribution of the droplets sprayed,
b) the spray angle; for example, 60 to 75°C, at an inlet temperature of 160 to 250°C, preferably at 170° to 190°, and
c) the outlet temperature; for example, 55 to 90°C, preferably at 60° to 70°C.

The pressure applied and spray angle are believed to be important parameters in determining the texture of the cake on the belt and then the resulting particle size distribution.

The belt moves the algal material into a drying zone and then a cooling zone. The inlet temperatures of the drying zone on the moving belt may be 40 to 80°C, preferably at 70° to 80°C, and the outlet temperature at 50 to 70°C, preferably 60° to 70°C. The inlet temperatures of the cooling zone may be from 10 to 40°C and the outlet temperature 20 to 60°C.

The microalgal flour granules according to the conditions of the preceding step of the process in accordance with the invention fall onto the moving belt with a residual moisture content of 2 to 4%.

Use of the above mentioned temperature ranges may bring the degree of moisture of the microalgal flour granules to a desired value of less than 4% and more preferably less than 2%.

Optionally, an antioxidant (e.g. BHA, BHT or others known in the art) can be added prior to drying to preserve freshness.

The final step of the process according to the invention consists, finally, in collecting the microalgal flour granules thus obtained.

Flour granules produced according to the embodiments described herein may be incorporated into a food product such as a soup, sauce, condiment, ice-cream, dehydrated eggs, dough, bread, cake, cookie or dry baked-good mix.

Other characteristic features and advantages of the invention will be apparent on reading the following Examples. However, they are given here only as an illustration and are not limiting.

### Example 1. Production of the microalgal flour

In an illustrative fermentation, a low-pigment mutant strain of *Chlorella protothecoides* (obtained through chemical and UV mutagenesis) was cultured in the dark to a lipid content of about 50% by dry cell weight and the resulting algal biomass was at a cell concentration of 150 g/l. Methods for producing and culturing low pigmentation *Chlorella protothecoides* are disclosed in U.S. Patent Application Pub. No. 2010-0297292, published November 25, 2010.

The biomass was milled using a bead mill with a lysis rate of 95%.

The biomass thus generated was pasteurised and homogenised under pressure in a GAUVIN two-stage homogeniser (250 bar at the first stage / 50 bar at the second) after adjustment of the pH to 7 with potassium hydroxide.

### Example 2. Drying of the homogenised "oil-in-water" emulsion of microalgal flour

The biomass obtained in Example 1 was dried:
- in a FILTERMAT™ device so as to obtain the microalgal flour,
- in a single-effect spray-drier (liquid dried by means of a single pass through the heat flow and then recovered at the bottom of the tower at the level of the cyclone or of the sleeve filter) sold by GEA NIRO, so as to obtain a control microalgal flour in accordance with what is commercially accessible.

The single-effect spray-drying operating conditions were the following:
- inlet temperature of 170°C to 190°C
- outlet temperature: 60°C to 70°C.

The product obtained with the single-effect spray-drying had a fine particle size distribution centered on 40 µm.

As regards a spray-drying process in accordance with embodiments of the invention, it consisted of spraying the homogenised suspension at high pressure in a FILTERMAT™ device sold by the company GEA/NIRO, equipped with a DELAVAN high-pressure injection nozzle, under the following conditions:
1) to obtain granules of fine particle size:
   - the spray angle was regulated at 60 to 75°,
   - the pressure was regulated at 100 to 150 bar;
2) to obtain granules of large particle size:
   - the spray angle was regulated at between 60 to 75°
   - the pressure was regulated at less than 50 bar.

Then, in a similar manner for the two particle sizes sought, the temperature parameters were regulated in the following way:
- spray-drying inlet temperature: 170°C to 190°C
- outlet temperature: 60°C to 70°C
- drying zone inlet temperature: 70°C to 90°C
- outlet temperature: 50 to 80°C
- cooling zone inlet temperature: 15°C

### Example 3. Characterization of the microalgal flour granules in accordance with embodiments of the invention

A microalgal flour was produced from FILTERMAT™ dried *Chlorella protothecoides* as in Examples 1-2. Particle characterization is given in Table 3-1, below.

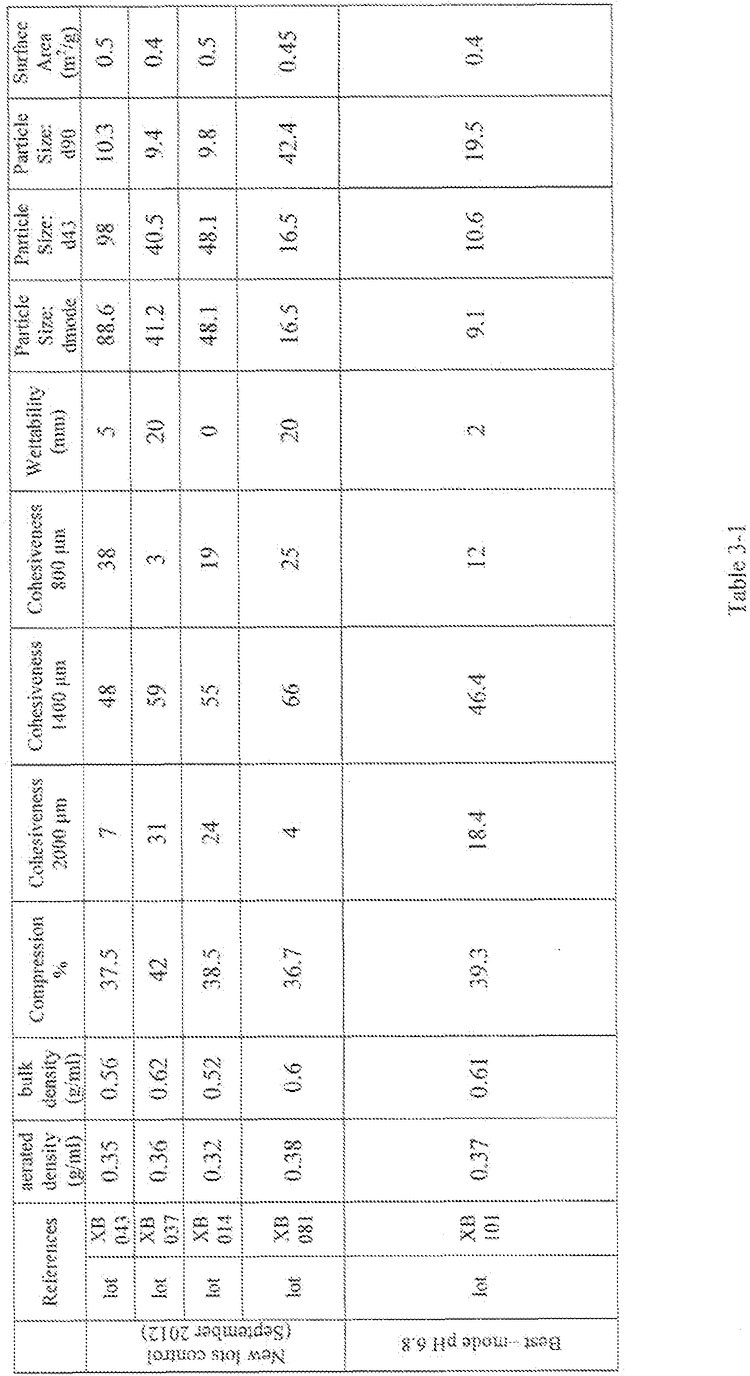

## Claims

1. Microalgal flour granules, wherein said granules have at least one of the following characteristics:
a particle size distribution of from 2 to 400 µm;
flow grades, determined according to test A as defined in the description, of
0.5 to 60% by weight for the oversize at 2000 µm,
0.5 to 60% by weight for the oversize at 1400 µm, and
0.5 to 95% by weight for the oversize at 800 µm; and
a degree of wettability, expressed according to test B as defined in the description, by the height of the product settled in a 600 mL, 125 mm tall beaker, at a value of 0.2 to 4.0 cm, preferably 1.0 to 3.0 cm,
wherein said microalgal flour granules comprise lysed and intact microalgal cells and the percentage of intact cells is 25% to 75% and the microalga is of the genus *Chlorella.*

2. Granules according to Claim 1, which have:
flow grades, determined according to test A as defined in the description, of
30 to 60% by weight of oversize at 2000 µm,
20 to 60% by weight of oversize at 1400 µm and
0.5 to 20% by weight of oversize at 800 µm; and
a degree of wettability, expressed according to test B as defined in the description, by the height of the product settled in a 600 mL, 125 mm tall beaker, at a value of 0.2 to 2.0 cm, preferably 1.2 to 1.4 cm.

3. Granules according to Claim 1, which have:
flow grades, determined according to test A as defined in the description, of
0.5 to 20% by weight of oversize at 2000 µm,
0.5 to 20% by weight of oversize at 1400 µm and
60 to 95% of oversize at 800 µm; and
a degree of wettability, expressed according to test B as defined in the description, by the height of the product settled in a 600 mL, 125 mm tall beaker, at a value of 2.0 to 4.0 cm, preferably 2.6 to 2.9 cm.

4. Granules according to any one of Claims 1 to 3, which have an aerated bulk density of 0.30 to 0.50 g/ml.

5. Granules according to any one of Claims 1 to 4, which have a specific surface area according to the BET method of 0.10 to 0.70 m²/g.

6. Granules according to any one of Claims 1 to 5, whose dispersibility in water is reflected by a zeta potential of -55 mV for a pH > 5 and a pI of 2.4.

7. Granules according to any one of claims 1 to 6, wherein the amount of lipid in the granules is at least 25% by dry cell weight.

8. Granules according to any one of claims 1 to 7, wherein the average particle size is less than 500 µM.

9. A process, for preparing the granules according to any one of Claims 1 to 8, comprising the following steps:
1) preparing a microalgal flour emulsion in water at a dry matter content of 15 to 40% by dry weight;
2) introducing the emulsion into a homogeniser and homogenising said emulsion;
3) spraying the homogenised emulsion in a vertical spray-drier having a spray-drying zone equipped with a high-pressure nozzle in its upper part and a moving belt, for moving algal material into a drying zone and then a cooling zone, at its base, wherein the spray-drier is regulated such that:
a) the pressure applied at the spray nozzles is at values of more than 200 bar, 200 to 150 bar, 150 to 100 bar, 100 to 50 bar, 50 to 25 bar or less than 50 bar (1 bar = 100 kPa) so as to select the particle size distribution of the droplets sprayed;
b) the spray angle is 50° to 80° at an inlet temperature of between 160 and 250°C, 160 to 200°C or 170 to 190°C;
c) the outlet temperature in the spray-drying zone is 55 to 90°C, preferably 60° to 70°C;
d) the inlet temperature of the drying zone on the moving belt is 40 to 80°C, preferably 60° to 70°C, and the outlet temperature is 40° to 80°C, preferably 60° to 70°C; and
e) the inlet temperature of the cooling zone is 10° to 40°C, preferably at 10° to 20°C, and the outlet temperature is 20 to 80°C, preferably 50 to 80°C, and
4) collecting the microalgal flour granules thus obtained.

10. The process of claim 9, wherein the homogeniser is a high pressure homogeniser or a bead mill, preferably a high pressure homogeniser.

11. The granules of any one of claims 1 to 8, obtainable by the process of claim 9 or claim 10.

12. A method, for controlling at least one of the particle size, flowability and wettability of a microalgal flour, which method comprises the following steps:
1) preparing a microalgal flour emulsion in water;
2) introducing the emulsion into a homogeniser and homogenizing said emulsion;
3) spraying the homogenised emulsion in a vertical spray-drier having a spray-drying zone equipped with a high-pressure nozzle in its upper part and a moving belt, for moving algal material into a drying zone and then a cooling zone, at its base, wherein the spray-drier is regulated such that:
a) the pressure applied at the spray nozzles is at values of more than 200 bar, 200 to 150 bar, 150 to 100 bar, 100 to 50 bar, 50 to 25 bar or less than 50 bar (1 bar = 100 kPa) so as to select the particle size distribution of the droplets sprayed;
b) the spray angle is 50° to 80° at an inlet temperature of between 160 and 250°C, 160 to 200°C or 170 to 190°C;
c) the outlet temperature in the spray-drying zone is 55 to 90°C, preferably 60° to 70°C;
d) the inlet temperature of the drying zone on the moving belt is 40 to 80°C, preferably 60° to 70°C, and the outlet temperature is 40° to 80°C, preferably 60° to 70°C; and
e) the inlet temperature of the cooling zone is 10° to 40°C, preferably at 10° to 20°C, and the outlet temperature is 20 to 80°C, preferably 50 to 80°C, and
4) collecting the microalgal flour granules thus obtained.

13. A method according to claim 12, wherein the collected flour granules have a value according to Test B as defined in the description of 0.2 to 4.0 cm.

14. A method according to claim 12 or claim 13, wherein the microalgal flour has a first population of droplets centered on a value between 0.1 and 1 µm and a second population of droplets centered on a value between 1 and 10 µm when dispersed in water according to Test C as defined in the description.

15. A method according to any one of claims 12 to 14, wherein the particles have zeta potential of -40 mV or less.

16. A method according to any one of claims 12 to 15, wherein the microalga is of the genus *Chlorella.*

17. A method according to any one of claims 12 to 16, wherein the average particle size of the microalgal flour is less than 500 µM.

18. A microalgal flour produced in accordance with any one of claims 13 to 17, wherein the microalgal flour granules comprise lysed and intact microalgal cells and the percentage of intact cells is 25% to 75%.

19. The granules, process, method or microalgal flour of any one of the preceding claims, wherein the microalga is *Chlorella protothecoides.*

## Patentansprüche

1. Mikroalgenmehlgranulat, wobei das Granulat mindestens eine der folgenden Eigenschaften aufweist:
eine Teilchengrößenverteilung von 2 bis 400 µm;
Fließgrade, die gemäß dem Test A, wie in der Beschreibung definiert, bestimmt wurden von
0,5 bis 60 Gew.-% für die Übergröße bei 2000 µm,
0,5 bis 60 Gew.-% für die Übergröße bei 1400 µm,
0,5 bis 95 Gew.-% für die Übergröße bei 800 µm, und
einen Grad der Benetzbarkeit, der gemäß Test B, wie in der Beschreibung definiert, ausgedrückt wird durch die Höhe des Produkts, das in ein 125 mm hohes 600 ml Becherglas gegeben wurde, mit einem Wert von 0,2 bis 4,0 cm, vorzugsweise 1,0 bis 3,0 cm,
wobei das Mikroalgenmehlgranulat lysierte und intakte Mikroalgenzellen umfasst und der Prozentsatz der intakten Zellen 25% bis 75% beträgt und die Mikroalge von der Gattung *Chlorella* stammt.

2. Granulat nach Anspruch 1, das aufweist:
Fließgrade, die gemäß Test A, wie in der Beschreibung definiert, bestimmt wurden, von
30 bis 60 Gew.-% für die Übergröße bei 2000 µm,
20 bis 60 Gew.-% für die Übergröße bei 1400 µm, und
0,5 bis 20 Gew.-% für die Übergröße bei 800 µm, und
einen Grad der Benetzbarkeit, der gemäß Test B, wie in der Beschreibung definiert, ausgedrückt wird durch die Höhe des Produkts, das in ein 125 mm hohes 600 ml Becherglas gegeben wurde, mit einem Wert von 0,2 bis 2,0 cm, vorzugsweise 1,2 bis 1,4 cm.

3. Granulat nach Anspruch 1, das aufweist:
Fließgrade, die gemäß Test A, wie in der Beschreibung definiert, bestimmt wurden von
0,5 bis 20 Gew.-% für die Übergröße bei 2000 µm,
0,5 bis 20 Gew.-% für die Übergröße bei 1400 µm, und
60 bis 95 Gew.-% für die Übergröße bei 800 µm; und
einen Grad der Benetzbarkeit, der gemäß Test B, wie in der Beschreibung definiert, ausgedrückt wird durch die Höhe des Produkts, das in ein 125 mm hohes 600 ml Becherglas gegeben wurde, mit einem Wert von 2,0 bis 4,0 cm, vorzugsweise 2,6 bis 2,9 cm.

4. Granulat nach einem der Ansprüche 1 bis 3, das eine lufthaltige Schüttdichte von 0,30 bis 0,50 g/ml aufweist.

5. Granulat nach einem der Ansprüche 1 bis 4, das eine spezifische Oberfläche gemäß dem BET-Verfahren von 0,10 bis 0,70 m²/g aufweist.

6. Granulat nach einem der Ansprüche 1 bis 5, dessen Dispergierbarkeit in Wasser von einem Zeta-Potential von -55 mV für einen pH-Wert > 5 und einem pI-Wert von 2,4 reflektiert wird.

7. Granulat nach einem der Ansprüche 1 bis 6, wobei die Menge an Lipid in dem Granulat mindestens 25% seines Trockenzellgewichts beträgt.

8. Granulat nach einem der Ansprüche 1 bis 7, wobei die mittlere Teilchengröße weniger als 500 µM beträgt.

9. Prozess zur Herstellung des Granulats nach einem der Ansprüche 1 bis 8, umfassend die folgenden Schritte:
1) Herstellen einer Mikroalgenmehremulsion in Wasser bei einem Trockenmassegehalt von 15 bis 40 Gew.-%;
2) Einführen der Emulsion in einen Homogenisator und Homogenisieren der Emulsion;
3) Sprühen der homogenisierten Emulsion in einem vertikalen Sprühtrockner mit einer Sprühtrockungszone, der mit einer Hochdruckdüse in seinem oberen Teil und einem Förderband zum Bewegen des Algenmaterials in eine Trocknungszone und dann in eine Kühlzone an seiner Basis ausgestattet ist, wobei der Sprühtrockner derart reguliert wird, dass:
a) der auf die Sprühdüsen aufgebrachte Druck bei Werten von mehr als 200 bar, 200 bis 150 bar, 150 bis 100 bar, 100 bis 50 bar, 50 bis 25 bar oder weniger als 50 bar (1 bar = 100kPa) liegt, um die Teilchengrößenverteilung der gesprühten Tröpfchen auszuwählen;
b) der Sprühwinkel 50° bis 80° bei einer Eintrittstemperatur von zwischen 160° bis 250°C, 160° bis 200°C oder 170° bis 190°C beträgt;
c) die Austrittstemperatur in der Sprühtrocknungszone 55° bis 90°C, vorzugsweise 60° bis 70°C beträgt;
d) die Eintrittstemperatur der Trocknungszone auf dem Förderband 40° bis 80°C, vorzugsweise 60° bis 70° beträgt, und die Austrittstemperatur 40° bis 80°, vorzugsweise 60° bis 70°C beträgt; und
e) die Eintrittstemperatur der Kühlzone 10° bis 40°C, vorzugsweise 10° bis 20° beträgt, und die Austrittstemperatur 20° bis 80°, vorzugsweise 50° bis 80°C beträgt, und
4) Sammeln des so erhaltenen Mikroalgenmehlgranulats.

10. Verfahren nach Anspruch 9, wobei der Homogenisator ein Hochdruckhomogenisator oder eine Kugelmühle, vorzugsweise ein Hochdruckhomogenisator ist.

11. Granulat nach einem der Ansprüche 1 bis 8, das durch ein Verfahren nach Anspruch 9 oder Anspruch 10 erhalten werden kann.

12. Verfahren zum Steuern von mindestens einem der Teilchengröße, Fließfähigkeit und Benetzbarkeit eines Mikroalgenmehls, wobei das Verfahren die folgenden Schritte umfasst:
1) Herstellen einer Mikroalgenmehlemulsion in Wasser;
2) Einführen der Emulsion in einen Homogenisator und Homogenisieren der Emulsion;
3) Sprühen der homogenisierten Emulsion in einem vertikalen Sprühtrockner mit einer Sprühtrockungszone, der mit einer Hochdruckdüse in seinem oberen Teil und einem Förderband zum Bewegen des Algenmaterials in eine Trocknungszone und dann in eine Kühlzone an seiner Basis ausgestattet ist, wobei der Sprühtrockner derart reguliert wird, dass:
a) der auf die Sprühdüsen aufgebrachte Druck bei Werten von mehr als 200 bar, 200 bis 150 bar, 150 bis 100 bar, 100 bis 50 bar, 50 bis 25 bar oder weniger als 50 bar (1 bar = 100kPa) liegt, um die Teilchengrößenverteilung der gesprühten Tröpfchen auszuwählen;
b) der Sprühwinkel 50° bis 80° bei einer Eintrittstemperatur von zwischen 160 bis 250°C, 160 bis 200°C oder 170 bis 190°C beträgt;
c) die Austrittstemperatur in der Sprühtrocknungszone 55° bis 90°C, vorzugsweise 60° bis 70°C beträgt;
d) die Eintrittstemperatur der Trocknungszone auf dem Förderband 40° bis 80°C, vorzugsweise 60° bis 70° beträgt, und die Austrittstemperatur 40° bis 80°, vorzugsweise 60° bis 70°C beträgt; und
e) die Eintrittstemperatur der Kühlzone 10° bis 40°C, vorzugsweise 10° bis 20° beträgt, und die Austrittstemperatur 20° bis 80°, vorzugsweise 50° bis 80°C beträgt, und
4) Sammeln des so erhaltenen Mikroalgenmehlgranulats.

13. Verfahren nach Anspruch 12, wobei das gesammelte Mehlgranulat einen Wert gemäß Test B, wie in der Beschreibung definiert, von 0,2 bis 4,0 cm aufweist.

14. Verfahren nach Anspruch 12 oder Anspruch 13, wobei das Mikroalgenmehl eine erste Tröpfchenpopulation aufweist, die sich auf einen Wert zwischen 0,1 und 1 µm konzentriert, und eine zweite Tröpfchenpopulation, die sich auf einen Wert von 1 und 10 µm konzentriert, wenn in Wasser dispergiert gemäß Test C, wie in der Beschreibung definiert.

15. Verfahren nach einem der Ansprüche 12 bis 14, wobei die Teilchen ein Zeta-Potential von -40 mV oder weniger aufweisen.

16. Verfahren nach einem der Ansprüche 12 bis 15, wobei die Mikroalge von der Gattung *Chlorella* stammt.

17. Granulat nach einem der Ansprüche 12 bis 16, wobei die mittlere Teilchengröße des Mikroalgenmehls weniger als 500 µM beträgt.

18. Mikroalgenmehl, das nach einem der Ansprüche 13 bis 17 hergestellt wurde, wobei das Mikroalgenmehlgranulat lysierte und intakte Mikroalgenzellen umfasst und der Prozentsatz der intakten Zellen 25% bis 75% beträgt.

19. Granulat, Prozess, Verfahren oder Mikroalgenmehl nach einem der vorhergehenden Ansprüche, wobei die Mikroalge *Chlorella protothecoides* ist.

## Revendications

1. Granulés de farine micro-algale, où lesdits granulés possèdent au moins l'une parmi les caractéristiques suivantes :
une distribution granulométrique allant de 2 à 400 µm ;
une fluidité, déterminée selon le test A tel que défini dans la description, allant
de 0,5 à 60 % en poids pour la surdimension à 2000 µm,
de 0,5 à 60 % en poids pour la surdimension à 1400 µm, et
de 0,5 à 95 % en poids pour la surdimension à 800 µm,
et
un degré de mouillabilité, exprimé selon le test B tel que défini dans la description, par la hauteur du produit sédimenté dans un bécher de 600 ml et d'une hauteur de 125 mm, d'une valeur allant de 0,2 à 4,0 cm, préférablement de 1,0 à 3,0 cm,
où lesdits granulés de farine micro-algale comprennent des cellules micro-algales lysées et intactes, et le pourcentage de cellules intactes va de 25 % à 75 % et
la microalgue appartient au genre *Chlorella.*

2. Granulés selon la revendication 1, qui possèdent :
une fluidité, déterminée selon le test A tel que défini dans la description, allant
de 30 à 60 % en poids pour la surdimension à 2000 µm,
de 20 à 60 % en poids pour la surdimension à 1400 µm, et
de 0,5 à 20 % en poids pour la surdimension à 800 µm,
et
un degré de mouillabilité, exprimé selon le test B tel que défini dans la description, par la hauteur du produit sédimenté dans un bécher de 600 ml et d'une hauteur de 125 mm, d'une valeur allant de 0,2 à 2,0 cm, préférablement de 1,2 à 1,4 cm.

3. Granulés selon la revendication 1, qui possèdent :
une fluidité, déterminée selon le test A tel que défini dans la description, allant
de 0,5 à 20 % en poids pour la surdimension à 2000 µm,
de 0,5 à 20 % en poids pour la surdimension à 1400 µm, et
de 60 à 95 % pour la surdimension à 800 µm,
et
un degré de mouillabilité, exprimé selon le test B tel que défini dans la description, par la hauteur du produit sédimenté dans un bécher de 600 ml et d'une hauteur de 125 mm, d'une valeur allant de 2,0 à 4,0 cm, préférablement de 2,6 à 2,9 cm.

4. Granulés selon l'une quelconque des revendications 1 à 3, qui possèdent une densité apparente aérée allant de 0,30 à 0,50 g/ml.

5. Granulés selon l'une quelconque des revendications 1 à 4, qui possèdent une surface spécifique, selon la méthode BET, allant de 0,10 à 0,70 m²/g.

6. Granulés selon l'une quelconque des revendications 1 à 5, dont la dispersibilité dans l'eau se traduit par un potentiel zêta de -55 mV pour un pH > 5 et un pI de 2,4.

7. Granulés selon l'une quelconque des revendications 1 à 6, où la quantité de lipides dans les granulés est d'au moins 25 % en poids de cellules sèches.

8. Granulés selon l'une quelconque des revendications 1 à 7, où la taille de particule moyenne est inférieure à 500 µm.

9. Procédé de préparation des granulés selon l'une quelconque des revendications 1 à 8, comprenant les étapes suivantes :
1) la préparation d'une émulsion de farine micro-algale dans de l'eau selon une teneur en matière sèche allant de 15 à 40 % en poids sec ;
2) l'introduction de l'émulsion dans un homogénéiseur et l'homogénéisation de ladite émulsion ;
3) la pulvérisation de l'émulsion homogénéisée dans un séchoir-atomiseur vertical ayant une zone de séchage par pulvérisation équipée d'une buse haute pression dans sa partie supérieure et d'une courroie mobile, afin de déplacer le matériau algal dans une zone de séchage puis une zone de refroidissement, au niveau de sa base, où le séchoir-atomiseur est régulé de telle sorte que :
a) la pression appliquée au niveau des buses de pulvérisation se trouve à des valeurs supérieures à 200 bars, allant de 200 à 150 bars, de 150 à 100 bars, de 100 à 50 bars, de 50 à 25 bars ou inférieures à 50 bars (1 bar = 100 kPa), de façon à sélectionner la distribution granulométrique des gouttelettes pulvérisées ;
b) l'angle de pulvérisation va de 50° à 80° à une température d'entrée comprise entre 160 et 250°C, allant de 160 à 200°C ou de 170 à 190°C ;
c) la température de sortie dans la zone de séchage par pulvérisation va de 55 à 90°C, préférablement de 60° à 70°C ;
d) la température d'entrée de la zone de séchage sur la courroie mobile va de 40 à 80°C, préférablement de 60° à 70°C, et la température de sortie va de 40° à 80°C, préférablement de 60° à 70°C ; et
e) la température d'entrée de la zone de refroidissement va de 10° à 40°C, préférablement de 10° à 20°C, et la température de sortie va de 20 à 80°C, préférablement de 50 à 80°C ; et
4) la collecte des granulés de farine micro-algale ainsi obtenus.

10. Procédé selon la revendication 9, dans lequel l'homogénéiseur est un homogénéiseur haute pression ou un broyeur à billes, préférablement un homogénéiseur haute pression.

11. Granulés selon l'une quelconque des revendications 1 à 8, pouvant être obtenus par le procédé selon la revendication 9 ou la revendication 10.

12. Méthode de contrôle d'au moins l'une parmi la taille de particule, la coulabilité et la mouillabilité d'une farine micro-algale, laquelle méthode comprend les étapes suivantes :
1) la préparation d'une émulsion de farine micro-algale dans de l'eau ;
2) l'introduction de l'émulsion dans un homogénéiseur et l'homogénéisation de ladite émulsion ;
3) la pulvérisation de l'émulsion homogénéisée dans un séchoir-atomiseur vertical ayant une zone de séchage par pulvérisation équipée d'une buse haute pression dans sa partie supérieure et d'une courroie mobile, afin de déplacer le matériau algal dans une zone de séchage puis une zone de refroidissement, au niveau de sa base, où le séchoir-atomiseur est régulé de telle sorte que :
a) la pression appliquée au niveau des buses de pulvérisation se trouve à des valeurs supérieures à 200 bars, allant de 200 à 150 bars, de 150 à 100 bars, de 100 à 50 bars, de 50 à 25 bars ou inférieures à 50 bars (1 bar = 100 kPa), de façon à sélectionner la distribution granulométrique des gouttelettes pulvérisées ;
b) l'angle de pulvérisation va de 50° à 80° à une température d'entrée comprise entre 160 et 250°C, allant de 160 à 200°C ou de 170 à 190°C ;
c) la température de sortie dans la zone de séchage par pulvérisation va de 55 à 90°C, préférablement de 60° à 70°C ;
d) la température d'entrée de la zone de séchage sur la courroie mobile va de 40 à 80°C, préférablement de 60° à 70°C, et la température de sortie va de 40° à 80°C, préférablement de 60° à 70°C ; et
e) la température d'entrée de la zone de refroidissement va de 10° à 40°C, préférablement de 10° à 20°C, et la température de sortie va de 20 à 80°C, préférablement de 50 à 80°C ; et
4) la collecte des granulés de farine micro-algale ainsi obtenus.

13. Méthode selon la revendication 12, dans laquelle les granulés de farine collectés possèdent une valeur selon le test B tel que défini dans la description, allant de 0,2 à 4,0 cm.

14. Méthode selon la revendication 12 ou la revendication 13, dans laquelle la farine micro-algale possède une première population de gouttelettes centrée sur une valeur comprise entre 0, 1 et 1 µm, et une deuxième population de gouttelettes centrée sur une valeur comprise entre 1 et 10 µm, lors de leur dispersion dans de l'eau selon le test C tel que défini dans la description.

15. Méthode selon l'une quelconque des revendications 12 à 14, dans laquelle les particules possèdent un potentiel zêta de -40 mV ou moins.

16. Méthode selon l'une quelconque des revendications 12 à 15, dans laquelle la microalgue appartient au genre *Chlorella.*

17. Méthode selon l'une quelconque des revendications 12 à 16, dans laquelle la taille de particule moyenne de la farine micro-algale est inférieure à 500 µM.

18. Farine micro-algale produite selon l'une quelconque des revendications 13 à 17, où les granulés de farine micro-algale comprennent des cellules micro-algales lysées et intactes, et le pourcentage de cellules intactes va de 25 % à 75 %.

19. Granulés, procédé, méthode ou farine micro-algale selon l'une quelconque des revendications précédentes, où la microalgue est *Chlorella protothecoides.*
